# EUROPEAN PATENT SPECIFICATION

(11) **EP 3 190 860 B1**
(45) Date of publication and mention of the grant of the patent: **21.08.2019**
(21) Application number: 15838715.9
(22) Date of filing: 04.09.2015
(51) Int. Cl.: H05B 6/10, C21D 1/00, C21D 1/42, C21D 9/60, F27B 9/36, H05B 6/36, F27D 11/06, H05B 6/40, H05B 6/44

(54) **INDUCTION HEATING DEVICE FOR METAL STRIP**
INDUKTIONSHEIZVORRICHTUNG FÜR METALLSTREIFEN
DISPOSITIF DE CHAUFFAGE À INDUCTION POUR BANDE MÉTALLIQUE

(30) Priority: 05.09.2014 JP 2014181710
(43) Date of publication of application: 12.07.2017
(73) Proprietor: Nippon Steel Corporation, Tokyo (JP)
(72) Inventor: HIROTA, Yoshiaki, Tokyo 100-8071 (JP); TAIRA, Masato, Tokyo 100-8071 (JP)
(74) Representative: Vossius & Partner Patentanwälte Rechtsanwälte mbB
(86) International application number: PCT/JP2015/075266
(87) International publication number: WO 2016/035893

(56) References cited:
- EP-A1- 2 112 863
- JP-A- H10 111 981
- JP-A- 2004 296 368
- JP-A- 2006 294 396
- JP-A- 2007 095 651
- JP-A- 2008 204 648
- JP-A- 2008 288 200
- JP-A- 2009 259 588
- JP-A- 2009 259 588
- JP-A- 2010 245 029
- JP-A- 2010 245 029

## Description

### Technical Field

The present description relates to an induction heating device for a metal strip.

### Background Art

Heating of a metal strip in a heat-treating furnace has been performed mainly by indirect heating using a radiant tube. The indirect heating restricts productivity because, in addition to large thermal inertia, valid heat input into a metal strip becomes difficult as the difference between the temperature of metal strip and furnace temperature becomes small. Furthermore, in the indirect heating using a radiant tube, for example, for a steel sheet such as a carbon steel, it is difficult to perform rapid heating near the transformation point at which endothermic reaction occurs, and to perform high-temperature annealing because of restriction by heat resistance of the radiant tube, restricting choice of degrees of freedom of heat treatment conditions for metal strip.

In contrast, induction heating in which a metal strip is heated with high-frequency current is capable of freely controlling heating speed and heating temperature, so that the induction heating has large degrees of freedom at the points of heat treatment operation and development of metal strip products and is a heating method that has been paid attention recently.

The induction heating is largely categorized into two methods. One is an LF (longitudinal flux heating) system for heating a metal strip by flowing high-frequency current in an induction coil surrounding the circumference of a metal strip to make magnetic flux pass through a cross section in the longitudinal direction (traveling direction) of the metal strip to generate induction current circulating in a cross section in the width direction of the metal strip perpendicular to the magnetic flux.

The other method is a TF (transverse flux heating) system for heating a metal strip by arranging inductors (sufficient magnetic bodies) around which respective primary coils are wound to sandwich the metal strip and flowing currents in the primary coils to make the magnetic fluxes generated by the currents pass through sheet surfaces of the metal strip via the inductors to generate induction currents in the sheet surfaces of the metal strip.

In the induction heating by the LF system for making induction current circulate in a sheet cross section, on the basis of the relationship between current penetration depth δ and current frequency f (δ(mm) = 5.03 × 10⁵√(ρ/µr·f), ρ(Ωm): specific resistance, µr: relative magnetic permeability, f: frequency (Hz)), when the current penetration depth of the induction current generated on the front and back of the metal strip is deeper than the thickness of the steel sheet, the generated currents interfere with each other, generating no induction current in a cross section of the metal strip.

For example, in the case of a non-magnetic metal strip or a steel sheet that loses magnetic properties over its Curie temperature, current penetration depth δ becomes deep, generating no induction current when the sheet thickness of the metal strip is thin. Furthermore, even in the case of magnetic material, no induction current generates in a cross section of steel sheet in the LF system when the sheet thickness is too thin as compared with penetration depth.

On the other hand, in the induction heating by the TF system, magnetic flux passes through a sheet surface of the metal strip, enabling the metal strip to be heated regardless of sheet thickness and difference of magnetism and non-magnetism, but heating efficiency is lowered or heating is entirely impossible in some cases when opposite inductors are not adjacent. Furthermore, overheating readily occurs at ends of the metal strip disadvantageously (for example, see Japanese Patent Application Laid-Open (JP-A) No. S63-119188).

Furthermore, when a magnetic metal strip is not located at the center of opposing inductors, the magnetic metal strip may be pulled to one of the inductors to make magnetic flux be concentrated regionally to increase temperature variation of the metal strip. Furthermore, in the induction heating by normal TF system, the inductor is difficult to be easily changed in its shape, disadvantageously making it difficult to cope with change in sheet width of the metal strip.

For that reason, for example, an electromagnetic induction heating device has been disclosed in Japanese Patent Application Laid-Open (JP-A) No. S59-205183 that includes a magnetic pole segments arranged in parallel with a sheet width direction of a sheet to oppose v the sheet and independently movable in the thick direction of the sheet and a movable masking shield made of a non-magnetic metal capable of appearing and retreating in the sheet width direction of the sheet for adjusting magnetic field generated by the magnetic pole segments.

The electromagnetic induction heating device of JP-A No. S59-205183 is capable of adjusting magnetic flux in response to change in sheet width of the sheet, but is difficult to rapidly adjust magnetic flux in sheet width direction when sheet width of the sheet is largely changed.

Japanese Patent Application Laid-Open (JP-A) No. 2002-008838 discloses an induction heating device having a plurality of independent magnetic bars and equipped with a magnetic circuit with a variable width adaptable to the width of a metal strip. However, in the induction heating device of JP-A No.2002-008838, an example is illustrated in which magnetic cores movable in a width direction is provided near respective induction coils placed apart from front and back sides.

EP 2 112 863 A1 describes an induction heating apparatus for controlling the temperature distribution for heating a metal plate irrespective of whether it has a small thickness, is magnetic or nonmagnetic, and capable of coping with a change in the width of the plate, or meandering of the plate. The apparatus heats a metal plate 1 by induction heating, which passes through the inside of induction coils 2, wherein in a vertical projected image of the conductors on the metal plate 1, the conductors 2a and 2b, parts of the induction coil, placed on the front surface side and the back surface side of the metal plate 1, the conductors 2a and 2b on the front surface side and the back surface side are arranged so as to not overlap each other in the lengthwise direction of the metal plate 1, the edge portion of at least either the conductor 2a on the front surface side of the metal plate 1 or the conductor 2b on the back surface side thereof is arranged aslant or arcuately, and magnetic cores 10 are arranged at the outer sides of the induction coils 2.

JP 2009 259588 A describes a device of induction heating a metal plate that passes through inside induction coils. Two sets or more of induction coils are arranged adjacently in longitudinal direction of the metal plate, and conductors to constitute the induction coils on the front side and the rear side of the metal plate are arranged shifted so as not to be overlapped in longitudinal direction of the metal plate in the center part of the metal plate in each of the two sets of induction coils, in the vertical projection image when the conductors constituting the induction coils are respectively vertically projected, and further, the conductors on the front side are arranged in proximity and the conductors on the rear side are arranged apart from them, or the conductor on the rear side are arranged in proximity and the conductors on the front side are arranged apart from them, and further, a magnetic core is arranged in the vicinity of the conductors.

### SUMMARY OF INVENTION

Embodiments of the description aims mainly to provide an induction heating device for a metal strip capable of controlling temperature distribution at ends in the sheet width direction of a metal strip by adjusting current density of and heating period by induction currents flowing at the ends in the sheet width direction of the metal strip.

According to an aspect of the present description, there is provided an induction heating device for a metal strip including: an induction coil including a first induction coil member and a second induction coil member that are provided in parallel with a metal strip across the metal strip that travels in a longitudinal direction thereof, that are provided such that both ends of each of the first induction coil member and the second induction coil member protrude from the traveling metal strip in a sheet width direction of the traveling metal strip, and that are arranged such that vertical projection images thereof onto the traveling metal strip do not overlap each other in a traveling direction in which the metal strip travels, first electrical connection means for electrically connecting one of both ends of the first induction coil member and one of both ends of the second induction coil member, and second electrical connection means for electrically connecting another one of the both ends of the first induction coil member and another one of the both ends of the second induction coil member; a first magnetic core including a first magnetic core member provided between the first induction coil member and the second induction coil member in the traveling direction, the first magnetic core member being provided on one of surface sides of the traveling metal strip and covering a large area of one end portion in the sheet width direction of the traveling metal strip, the large area being on a side of each of the first induction coil member and the second induction coil member, and covering a small area of the one end portion at a center portion between the first induction coil member and the second induction coil member, and a second magnetic core member provided between the first induction coil member and the second induction coil member in the traveling direction, the second magnetic core member being provided on another one of the surface sides opposite from the one of the surface sides of the traveling metal strip and covering a large area of the one end portion in the sheet width direction of the traveling metal strip, the large area being on the side of each of the first induction coil member and the second induction coil member, and covering a small area of the one end portion at the center portion between the first induction coil member and the second induction coil member; and a second magnetic core including a third magnetic core member provided between the first induction coil member and the second induction coil member in the traveling direction, the third magnetic core member being provided on the one of the surface sides of the traveling metal strip and covering a large area of another end portion opposite from the one end portion in the sheet width direction of the traveling metal strip, the large area being on the side of each of the first induction coil member and the second induction coil member, and covering a small area of the another end portion at the center portion between the first induction coil member and the second induction coil member, and a fourth magnetic core member provided between the first induction coil member and the second induction coil member in the traveling direction, the fourth magnetic core member being provided on another one of the surface sides of the traveling metal strip and covering a large area of the another end portion in the sheet width direction of the traveling metal strip, the large area being on the side of each of the first induction coil member and the second induction coil member, and covering a small area of the another end portion at the center portion between the first induction coil member and the second induction coil member.

### BRIEF DESCRIPTION OF DRAWINGS

Fig. 1 is a diagram illustrating a mode of an induction heating device in which an induction coil member on a front surface side of a metal strip and an induction coil member on a back surface side of the metal strip are arranged such that a vertical projection image of the induction coil member on the front surface side of the metal strip and a vertical projection image of the induction coil member on the back surface side of the metal strip do not overlap in a longitudinal direction of the metal strip.
Fig. 2A is a diagram illustrating a plane aspect of an induction current generated in the whole metal strip.
Fig. 2B is A-A cross section of Fig. 2A, and is a diagram illustrating a mode of the induction current at the end cross section of the metal strip of the induction current generated in the whole metal strip.
Fig. 3A is a diagram illustrating a cross sectional structure of a magnetic core for comparison.
Fig. 3B is a diagram schematically illustrating a cross sectional structure of a magnetic core used in embodiments of the description.
Fig. 3C is a diagram schematically illustrating a cross sectional structure of another magnetic core used in the embodiments of the description.
Fig. 3D is a diagram schematically illustrating a cross sectional structure of still another magnetic core used in the embodiments of the description.
Fig. 4 is a diagram illustrating an arrangement mode of the magnetic core in the embodiments of the description, and is a diagram illustrating a case where the magnetic core is not divided into a plurality of magnetic cores and the induction coil members are arranged in parallel with a sheet width direction of the metal strip.
Fig. 5A is a diagram illustrating an arrangement mode of the magnetic core in the embodiments of the description, and is a diagram illustrating a case where the magnetic core is divided into a plurality of magnetic cores and the induction coil members are arranged in parallel with the sheet width direction of the metal strip.
Fig. 5B is a diagram illustrating an arrangement mode of the magnetic core in the embodiments of the description, and is a diagram illustrating a case where the magnetic core is divided into a plurality of magnetic cores and the induction coil members are arranged so as to incline toward ends in the sheet width direction.
Fig. 6 is a diagram illustrating a circulation mode of induction current circulating in the metal strip.
Fig. 7 is a diagram illustrating an arrangement mode of magnetic cores in the case where two pairs of induction coils are adjacently placed in parallel.
Fig. 8 is a diagram illustrating an arrangement mode of magnetic cores in the case where two pairs of induction coils are coupled by series connection.
Fig. 9A is a diagram illustrating an arrangement mode of the magnetic core in the embodiments of the description, and is a diagram illustrating a case where the induction coil is of a TF system.
Fig. 9B is a diagram illustrating a circulation mode of induction current circulating in the metal strip in the case of Fig. 9A.
Fig. 9C is a diagram illustrating a circulation mode of induction current circulating in the metal strip in the case where the plurality of magnetic cores is not provided in Fig. 9A.
Fig. 10 is a diagram schematically illustrating a configuration of analysis model in an example.
Fig. 11 is a diagram schematically illustrating a configuration of analysis model in Comparative Example 2.
Fig. 12 is a diagram schematically illustrating a configuration of analysis model in Comparative Example 3.

### DESCRIPTION OF EMBODIMENTS

In an induction heating device, a magnetic core arranged on the side of an end in the sheet width direction of a metal strip that travels in a longitudinal direction to cover the end pushes, at the end of the metal strip, the induction current generated by induction coils arranged on the front and the back sides of the metal strip outside the magnetic core (center direction of the metal strip) to suppress the induction current from being concentrated at the end of the metal strip.

However, it is difficult to adequately control current density of and heating period by induction current flowing at the end in the sheet width direction of the metal strip to appropriately control temperature distribution at the end in the sheet width direction of the metal strip by only partially arranging the magnetic core at the end in the sheet width direction of the metal strip.

The present inventors have intensively studied about a method of adequately controlling current density of and heating period by induction current flowing at the end in the sheet width direction of the metal strip to appropriately control temperature distribution at the end in the sheet width direction of the metal strip. As a result, the inventors have found that arrangement of a magnetic core having a predetermined profile on the side of an end in the sheet width direction at the end in the sheet width direction of the metal strip at which induction current flows instead of partially arranging a magnetic core at the end in the sheet width direction of the metal strip makes it possible to adequately control current density of and heating period by induction current flowing at the end in the sheet width direction of the metal strip and to appropriately control temperature distribution at the end in the sheet width direction of the metal strip. It is preferable that the predetermined profile is a shape covering a large area of the end in the sheet width direction of the metal strip on each of both end sides in the traveling direction of the metal strip and near corresponding one of induction coils, and covering a small area of the end at a center portion as compared with the both end sides.

Furthermore, the inventors have found that the magnetic core may be divided into a plurality of members in a traveling direction of a metal strip, and that temperature distribution of an end in the sheet width direction of a metal strip can be freely controlled as long as including moving means for moving each of the divided plurality of members in the sheet width direction of the metal strip.

Embodiments of the description are made on the basis of the above knowledge. Hereinafter, induction heating devices of the embodiments of the description will be described with reference to the drawings.

First, the induction heating device that is the premise of the embodiments of the description and a mode of induction current generated in a metal strip by the induction heating device will be described.

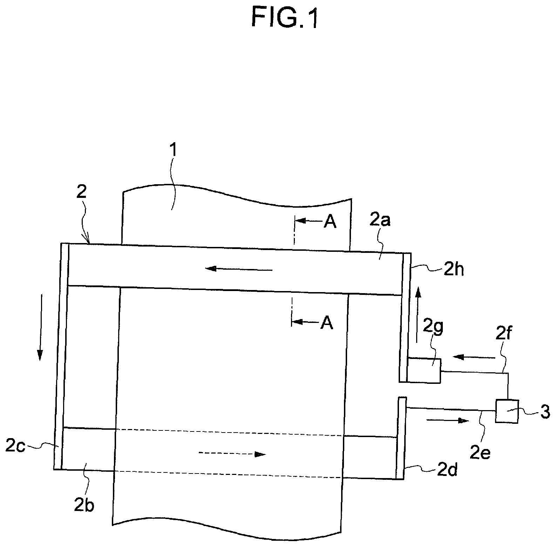

Fig. 1 illustrates a mode of the induction heating device in which an induction coil member 2a on the front surface side of the metal strip 1 and an induction coil member 2b on the back surface side of the metal strip 1 are arranged such that a vertical projection image of the induction coil member 2a on the front surface side of the metal strip 1 onto the metal strip 1 and a vertical projection image of the induction coil member 2b on the back surface side of the metal strip 1 onto the metal strip 1 are not overlapped in a longitudinal direction (traveling direction) of the metal strip 1.

The induction coil member 2a and the induction coil member 2b are arranged in parallel with the metal strip 1. Both ends of the induction coil member 2a and both ends of the induction coil member 2b are protruded from the metal strip 1 in the sheet width direction of the metal strip 1.

In the induction heating device illustrated in Fig. 1, an end of the induction coil member 2a on the front surface side of the metal strip 1 passing through the inside of an induction coil 2 and an end of the induction coil member 2b on the back surface side of the metal strip 1 are coupled with a conductor 2c, and the other end of the induction coil member 2b is connected to a power source 3 via a conductor 2d and a conductive wire 2e, and the other end of the induction coil member 2a is connected to the power source 3 via a conductor 2h, a coupler 2g, and a conductive wire 2f. Current flows in the directions of the arrows in the drawing. The conductor 2c is an example of electrical connection means, and the conductor 2d, the conductive wire 2e, the conductive wire 2f, and the conductor 2h are also examples of electrical connection means. The induction coil 2 includes the induction coil member 2a, the induction coil member 2b, the conductor 2c, the conductor 2d, the conductive wire 2e, the conductive wire 2f, and the conductor 2h.

The induction coil member 2a and the induction coil member 2b are arranged such that the vertical projection image that is the vertical projection of the induction coil member 2a onto the metal strip 1 and the vertical projection image that is the vertical projection of the induction coil member 2b onto the metal strip 1 are not overlapped in the longitudinal direction (traveling direction) of the metal strip 1.

In the case of the above LF method, induction currents having the same magnitude flow on the respective front and back surfaces of the metal strip in reverse directions, so that when current penetration depth δ is deep, the induction currents interfere to each other, making no induction current flow. However, in the case of Fig. 1, the induction coil members 2a and 2b are arranged such that the vertical projection images that are vertical projections thereof onto the metal strip 1 are not overlapped in the longitudinal direction (traveling direction) of the metal strip 1, so that each of the induction current flowing in the metal strip 1 just below the induction coil member 2a and the induction current flowing in the metal strip 1 just below the induction coil member 2b becomes a current that flows in only one direction, allowing the currents to flow without interfering to each other even when current penetration depth δ is deep.

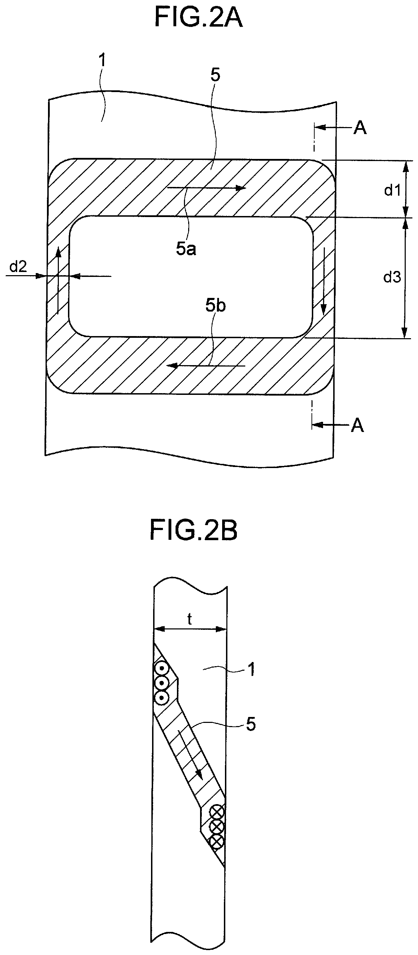

Figs. 2A and 2B illustrate a mode of an induction current 5 generated in the whole metal strip 1. Fig. 2A illustrates a planer mode of the induction current, and Fig. 2B illustrates a mode of the induction current 5 at an end cross section (A-A cross section of Fig. 2A) of the metal strip 1.

In the metal strip 1 just below the induction coil members 2a, 2b (not shown), an annular induction current 5 (5a, 5b) generates that flows in the directions of the arrows (inverse directions of the current flowing in the induction coil members 2a, 2b) as illustrated in Fig. 2A. The induction coil member 2a is arranged on the front surface side of the metal strip 1, and the induction coil member 2b is arranged on the back surface side of the metal strip 1, so that the induction current 5 flows to obliquely cross the end cross section of the metal strip 1 as illustrated in Fig. 2B. Even when the metal strip 1 is non-magnetic material, the induction currents 5 generates and circulates, enabling the metal strip 1 to be heated. Fig. 2B illustrates a state of current flow when the sheet thickness of the metal strip 1 is thick, but when the sheet thickness of the metal strip 1 is thin, current does not obliquely cross and flows in the whole sheet thickness of the metal strip 1.

However, overheating readily occurs at the ends in the sheet width direction of the metal strip 1, because, for example, (a) the induction current flowing at the ends in the sheet width direction of the metal strip 1 tries to make the reactance between with the primary current flowing in the conductor 2c (see Fig. 1) coupling the induction coil member 2a on the front surface side with the induction coil member 2b on the back surface side of the metal strip 1 (see Fig. 1), or flowing in the conductor 2d, the conductive wire 2e, the conductive wire 2f, and the conductor 2h (see Fig. 1) coupling the induction coil on the front surface side and the induction coil on the back surface side of the metal strip with the power source small to be unfortunately shifted to the ends in the sheet width direction of the metal strip 1, unfortunately narrowing the width d2 of the current path, (b) the magnetic flux generated by the primary current flowing in the conductor 2c, the conductor 2d, the conductive wire 2e, the conductive wire 2f, and the conductor 2h concentrically passing through the ends in the sheet width direction of the adjacent metal strip 1, and (c) at the ends in the sheet width direction of the metal strip 1, as compared with the center of the metal strip 1, heating is performed for a long period by the distance d3 in the longitudinal direction (traveling direction) of the metal strip 1 (heating distance for the center is d1 × 2, heating distance for the ends in the sheet width direction is d1 × 2 + d3).

Furthermore, when the induction coil 2 is a pair of coil members, magnetic flux spreads outside the induction coil 2, which lowers the current density of the induction current 5 at the center of the metal strip 1, making it difficult to increase the temperature at the center to make the thermal difference between the center and the ends in the sheet width direction of the metal strip 1 readily increase.

So, in the induction heating device of the embodiments of the description, to control the induction current 5 flowing at the ends in the sheet width direction of the metal strip 1 across the whole width of the ends where the induction current 5 flows and to freely control the temperature distribution in the sheet width direction of the metal strip 1, a plurality of magnetic cores capable of covering the ends in the sheet width direction of the metal strip 1 and the metal strip 1 beyond the ends is arranged across the whole width between the vertical projection image of the induction coil member 2a on the front surface side of the metal strip 1 onto the metal strip 1 and the vertical projection image of the induction coil member 2b on the back surface side of the metal strip 1 onto the metal strip 1 so as to be movable forwardly and backwardly in the sheet width direction of the metal strip 1.

The induction coil members 2a, 2b may be one conductor or may be a plurality of conductors. Furthermore, a magnetic core for a back surface may be mounted at the back surface of the induction coil members 2a, 2b to enforce magnetic flux.

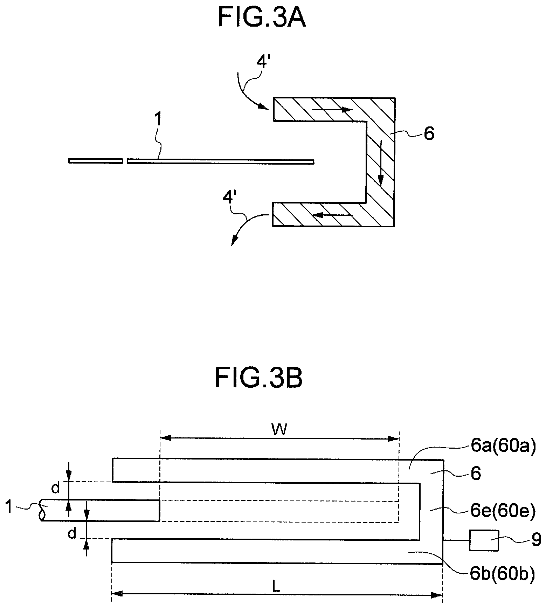

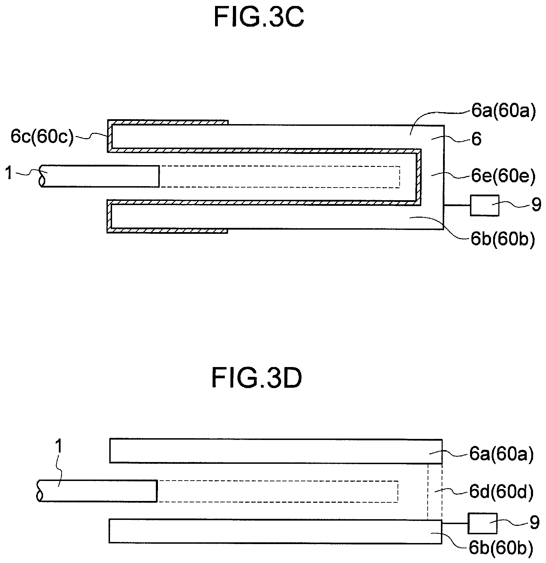

Figs. 3A to 3D each illustrate a cross sectional structure of a magnetic core 6. Fig. 3A illustrates a cross sectional structure of the magnetic core 6 for comparison, Fig. 3B illustrates a cross sectional structure of the magnetic core 6 used in the embodiments, and Fig. 3C illustrates a cross sectional structure of another magnetic core 6 used in the embodiments. Fig. 3D schematically illustrates a cross sectional structure of a still another magnetic core 6 used in the embodiments.

The size of the magnetic core 6 is not limited to a specific range and may be appropriately set on the basis of the distance between the induction coil members 2a, 2b on the front surface side and back surface side of the metal strip 1, the sheet width of the metal strip 1, and the number of the magnetic cores 6 to be arranged.

Although the magnetic core 6 is formed of a ferromagnetic substance, the ferromagnetic substance is not limited to a ferromagnetic substance of a specific material. The ferromagnetic substance includes, for example, ferrite, laminated magnetic steel sheet, and amorphous alloy, and may be appropriately selected depending on heating capability, frequency, etc. applied to the induction heating device.

As illustrated in Fig. 3A, the magnetic core 6 for comparison covering the end in the sheet width direction of the metal strip 1 absorbs magnetic flux 4' excited by the induction coil (not shown) (see the arrows passing through the magnetic core 6') to prevent magnetic flux concentration to the end in the sheet width direction of the metal strip 1, and suppresses excessive temperature increase at the end in the sheet width direction of the metal strip 1. However, when the magnetic core 6' is partially and individually arranged, the suppress effect of end current is limited, so that the effect is small.

In the magnetic core 6 used in the embodiments illustrated in Fig. 3B, the distance d with the metal strip 1 is set narrow to suppress passage of current effectively at the end in the sheet width direction of the metal strip 1, the length L of the magnetic core in the sheet width direction of the metal strip 1 is set long such that the magnetic core 6 covers the metal strip beyond the end in the sheet width direction of the metal strip 1 to be able to appropriately control distribution of the induction current, and the depth of the portion covering the metal strip 1 is set deep such that the magnetic core 6 is capable of immediately cope with change W in the sheet width of the metal strip 1.

The magnetic core 6 includes a magnetic core member 6a on the front surface side of the metal strip 1, a magnetic core member 6b on the back surface side thereof, and a magnetic core member 6e for coupling ends (right side ends in the drawings) of the magnetic core member 6a and the magnetic core member 6b, which are on the side opposite from the portions of the magnetic core member 6a and the magnetic core member 6b covering the metal strip 1.

A surface portion readily accepting heat of the magnetic core 6 may be covered with a non-magnetic heat insulating material 6c as illustrated in Fig. 3C to suppress temperature increase due to radiation heat from the heated metal strip 1 to stably use the magnetic core 6. Note that when temperature increase of the magnetic core 6 cannot be suppressed only by coating of the heat insulating material 6c, the magnetic core 6 may be cooled by, for example, attaching a water-cooling plate (not shown) to the magnetic core 6 or by providing a gas cooling device (not shown) near the magnetic core 6.

The induction heating device of the embodiments is provided with a moving member 9 for moving the magnetic core 6 illustrated in Fig. 3B or 3C forward and backward in the sheet width direction of the metal strip 1. Moving the magnetic core 6 in the sheet width direction of the metal strip 1 by the moving member 9 is performed by, for example, moving a carriage for holding the magnetic core with a driving device such as an electric cylinder, an air cylinder, or a motor in an orbit. However, the magnetic core 6 may only to be moved quickly and smoothly in the sheet width direction of the metal strip 1, and the moving member for the magnetic core 6 is not specifically specified as long as the conditions are satisfied.

Fig. 3D schematically illustrates a cross sectional structure of a still another magnetic core 6 used in the embodiments. In the magnetic core 6 illustrated in Fig. 3D, an end (a right end in the drawing) of the magnetic core 6 are not coupled by a magnetic body. The magnetic core 6 includes a magnetic core member 6a on the front surface side and a magnetic core member 6b on the back surface side of the metal strip 1. To keep the distance between the magnetic core member 6a and the magnetic core member 6b, the ends on the side opposite to the portions covering the metal strip 1 (in the drawing, right side ends) are coupled by a coupling member 6d that is non-magnetic and has heat resistance.

In the magnetic core 6 illustrated in Fig. 3D, although the magnetic core member 6a and the magnetic core member 6b are arranged on the front surface side and the back surface side of the metal strip 1, respectively, and the magnetic core member 6a and the magnetic core member 6b are coupled by the coupling member 6d, the magnetic core 6 illustrated in Fig. 3D has the current suppressing effect similar to that by the magnetic core 6 illustrated in Fig. 3B in which the magnetic core member 6a and the magnetic core member 6b are coupled by the magnetic core member 6e. The magnetic core 6 is capable of immediately following change in sheet width by forward/backward movement in the sheet width direction of the metal strip 1 by the moving member 9 even when the sheet width of the metal strip 1 is changed, and makes it possible to immediately follow positional deviation even when the metal strip 1 continuously snakes and the position of the end in the sheet width direction is largely deviated.

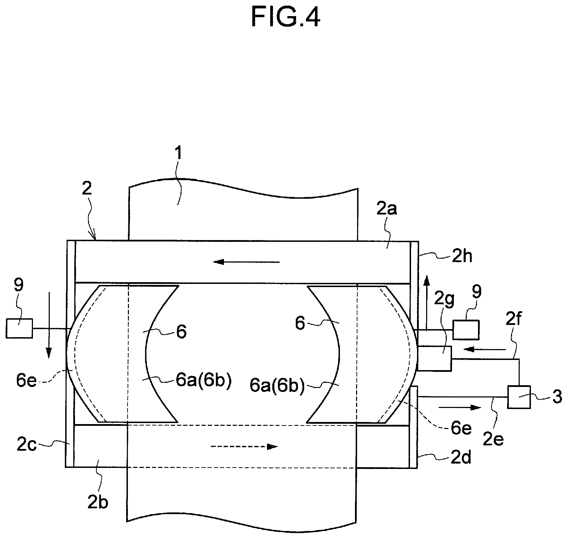

Fig. 4 illustrates an arrangement mode of the magnetic cores 6 in the embodiments. The induction coil members 2a, 2b are arranged in parallel with the sheet width direction of the metal strip 1. The magnetic cores 6 capable of covering the respective ends in the sheet width direction of the metal strip 1 and the metal strip 1 beyond the ends are arranged on the both sides in the sheet width direction of the metal strip 1. The magnetic cores 6 are arranged across the whole width between the vertical projection image of the induction coil member 2a on the front surface side of the metal strip 1 onto the metal strip 1 and the vertical projection image of the induction coil member 2b on the back surface side of the metal strip 1 onto the metal strip 1.

As illustrated in Fig. 3B, the magnetic core 6 includes the magnetic core member 6a on the front surface side and the magnetic core member 6b on the back surface side of the metal strip 1, and the magnetic core member 6e coupling the ends (in the drawing, right side ends) on the side opposite from the portions covering the metal strip 1 of the magnetic core member 6a and the magnetic core member 6b. Note that the non-magnetic coupling member 6d may be provided instead of the magnetic core member 6e as illustrated in Fig. 3D. Alternatively, as illustrated in Fig. 3C, the magnetic core 6 may be covered with the non-magnetic heat insulating material 6c.

The magnetic core member 6a and the magnetic core member 6b cover a large area of the end in the sheet width direction of the metal strip 1 on the side of each of the induction coil member 2a and the induction coil member 2b, and cover a small area of the ends at the center portion between the induction coil member 2a and the induction coil member 2b. The side of each of the magnetic core member 6a and the magnetic core member 6b covering the end in the sheet width direction of the metal strip 1 is bent.

The magnetic core member 6a and the magnetic core member 6b are movable forwardly and backwardly in the sheet width direction of the metal strip 1 by the moving member 9 to follow change in the sheet width, and capable of following positional deviation due to snaking or the like of the metal strip 1.

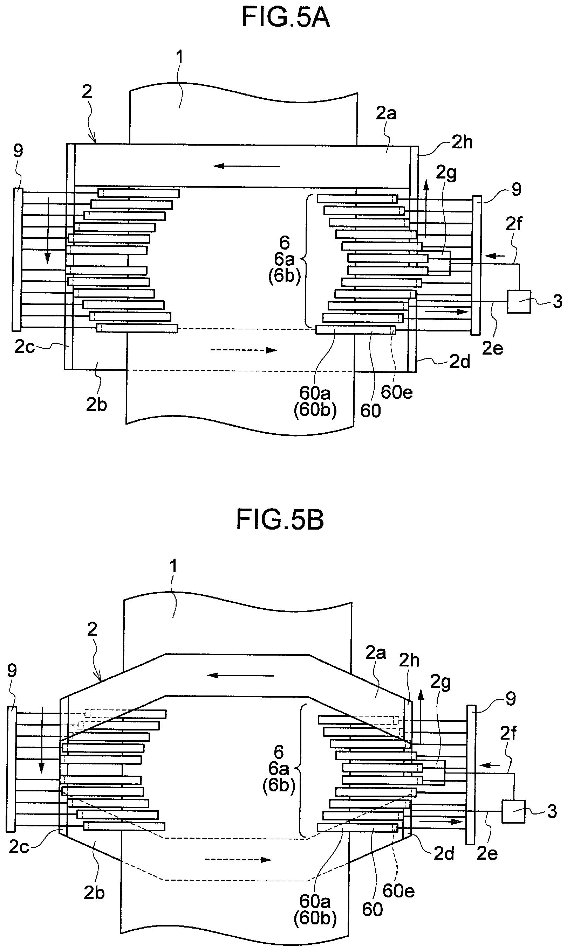

Figs. 5A and 5B each illustrate an arrangement mode of the magnetic cores 6 of the embodiment. Fig. 5A illustrates a case where the induction coil members 2a, 2b are arranged in parallel with the sheet width direction of the metal strip 1, and Fig. 5B illustrates a case where the induction coil members 2a, 2b are arranged to incline toward the ends in the sheet width direction of the metal strip 1. The case is illustrated in which the induction coil member 2a is arranged to incline on the side of the induction coil member 2b toward the ends in the sheet width direction of the metal strip 1, and the induction coil member 2b is arranged to incline on the side of the induction coil member 2a toward the ends in the sheet width direction of the metal strip 1.

As illustrated in Figs. 5A, 5B, the magnetic cores 6 capable of covering the ends in the sheet width direction of the metal strip 1 and the metal strip 1 beyond the ends in the sheet width direction are arranged on the respective both sides in the sheet width direction of the metal strip 1. The magnetic cores 6 are arranged across the whole width between the vertical projection image of the induction coil member 2a on the front surface side of the metal strip 1 onto the metal strip 1 and the vertical projection image of the induction coil member 2b on the back surface side of the metal strip 1 onto the metal strip 1.

The magnetic core 6 is divided into a plurality of magnetic cores 60 in the longitudinal direction (traveling direction) of the metal strip 1. The magnetic core member 6a on the front surface side of the metal strip 1 is divided into a plurality of magnetic core members 60a. The magnetic core member 6b on the back surface side of the metal strip 1 is divided into a plurality of magnetic core members 60b. The magnetic core member 6e coupling the ends on the side opposite from the portions covering the metal strip 1 (in the drawing, right side ends) of the magnetic core member 6a and the magnetic core member 6b is divided into a plurality of magnetic core members 60e. The number of the plurality of magnetic core members 60a equals to the number of the plurality of magnetic core members 60b, and the plurality of magnetic core members 60a and the plurality of magnetic core members 60b are arranged such that the vertical projection image of the plurality of magnetic core members 60a and the vertical projection image of the plurality of magnetic core members 60b onto the metal strip 1 are overlapped each other in the traveling direction of the metal strip 1.

The divided magnetic core 60 includes the magnetic core member 60a on the front surface side and the magnetic core member 60b on the back surface side of the metal strip 1, and the magnetic core member 60e coupling the ends on the side opposite from the portions covering the metal strip 1 (in the drawing, right side ends) of the magnetic core member 60a and the magnetic core member 60b as illustrated in Fig. 3B. Note that the non-magnetic coupling member 60d may be provided instead of the magnetic core member 60e as illustrated in Fig. 3D. Alternatively, as illustrated in Fig. 3C, the magnetic core 60 may be covered with the non-magnetic heat insulating material 60c.

The plurality of magnetic core members 60a and the plurality of magnetic core members 60b are movable forwardly and backwardly in the sheet width direction of the metal strip 1 by the moving member 9 to follow change in the sheet width, and capable of following positional deviation due to snaking or the like of the metal strip 1. Furthermore, the moving member 9 enables a line connecting the side of the magnetic core members 60a and magnetic core members 60b covering the end in the sheet width direction of the metal strip 1 to be a predetermined profile.

The plurality of magnetic cores 60 is not necessary to be arranged with no gap in the whole width between the vertical projection image of the induction coil member 2a on the front surface side of the metal strip 1 onto the metal strip 1 and the vertical projection image of the induction coil member 2b on the back surface side of the metal strip 1 onto the metal strip 1, and an appropriate number of magnetic cores 60 may be arranged at predetermined intervals to provide a desired heating temperature distribution.

The line connecting the side of the magnetic core members 60a and magnetic core members 60b covering the end in the sheet width direction of the metal strip 1 is bent. The plurality of magnetic cores 60 is arranged to cover the end in the sheet width direction of the metal strip 1 in the center area between the induction coil member 2a and the induction coil member 2b, and is arranged to cover an inside of the metal strip 1 beyond the end in the sheet width direction of the metal strip 1 in the area near the induction coil member 2a and the area near the induction coil member 2b. The magnetic core members 60a and the magnetic core members 60b cover a large area of the end in the sheet width direction of the metal strip 1 on the side of each of the induction coil member 2a and the induction coil member 2b, and cover a small area of the end at the center portion between the induction coil member 2a and the induction coil member 2b.

Advance/retreat control of the magnetic core members 60a and the magnetic core members 60b in the sheet width direction gradually suppresses flowing direction of the induction current concentrated at the ends in the sheet width direction of the metal strip 1 to adjust current density and heating period of the current flowing at the ends of the metal strip to prevent overheating at the ends in the sheet width direction of the metal strip 1.

Furthermore, heat generation distribution in the sheet width direction of the metal strip 1 is accurately controlled by freely adjusting the current distribution of the induction current circulating on the sheet surface of the metal strip 1.

For example, when the metal strip 1 is heated by a radiant tube in the stage before using the induction heating device to make the ends of the metal strip be in a high temperature state, making temperature distribution in the sheet width direction of the metal strip even is possible at the exit side of the induction heating device by suppressing calorific value at the ends so as to be smaller than calorific value at the center of the metal strip by suppressing the current flowing at the ends of the metal strip.

In the case of the arrangement of the magnetic cores 60 illustrated in Fig. 5B, the current flowing at the ends in the sheet width direction of the metal strip 1 can be adjusted to some extent by the induction coil members 2a, 2b themselves, so that the number of the magnetic cores 60 arranged between the induction coil members 2a, 2b may be smaller as compared with the case of Fig. 5A.

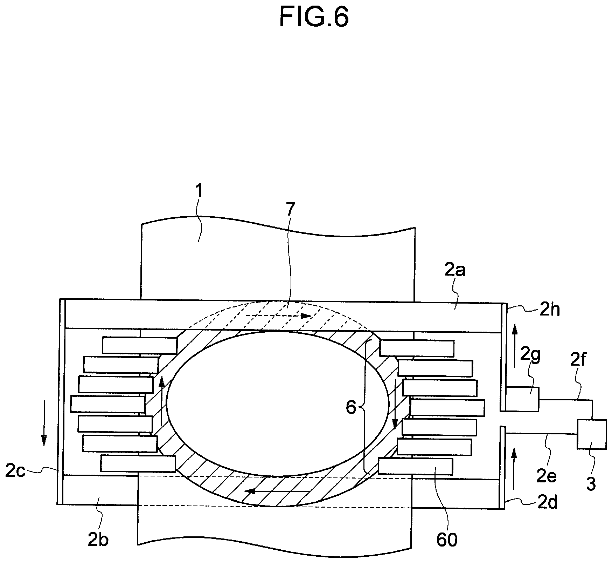

Fig. 6 illustrates a circulation mode of an induction current 7 generated in the metal strip 1 in the case where the induction coil member 2a, the induction coil member 2b, and the plurality of magnetic cores 60, which are described with reference to Fig. 5A, are arranged. The induction current 7 generated by the induction coil member 2a on the front surface side of the metal strip 1 and the induction coil member 2b on the back surface side of the metal strip 1 and suppressed in its concentration to the ends of the metal strip 1 by the plurality of magnetic cores 60 arranged on the both sides of the ends in the sheet width direction of the metal strip 1 elliptically circulates clockwise in the sheet surface of the metal strip 1. In this manner, the plurality of magnetic cores 60 gradually suppresses flowing direction of the induction current concentrated at the ends in the sheet width direction of the metal strip 1 to adjust current density and heating period of the current flowing at the ends of the metal strip 1 to prevent overheating at the ends in the sheet width direction of the metal strip 1.

Note that also in the case where the induction coil member 2a, the induction coil member 2b, and the plurality of magnetic cores 60 described with reference to Fig. 5B are arranged, the induction current 7 generated by the induction coil member 2a on the front surface side of the metal strip 1 and the induction coil member 2b on the back surface side of the metal strip 1 and suppressed in its concentration to the ends of the metal strip 1 by the plurality of magnetic cores 60 arranged on the both sides of the ends in the sheet width direction of the metal strip 1 elliptically circulates clockwise in the sheet surface of the metal strip 1. Further, also in the case where the induction coil member 2a, the induction coil member 2b, and the magnetic cores 6 described with reference to Fig. 4 are arranged, the induction current 7 generated by the induction coil member 2a on the front surface side of the metal strip 1 and the induction coil member 2b on the back surface side of the metal strip 1 and suppressed in its concentration to the ends of the metal strip 1 by the magnetic cores 6 arranged on the both sides of the ends in the sheet width direction of the metal strip 1 elliptically circulates clockwise in the sheet surface of the metal strip 1.

The arrangement of the plurality of magnetic cores 60 and advance/retreat control of the plurality of magnetic cores 60 do not necessarily need to be symmetric on the both sides in the sheet width direction of the metal strip 1. In the case where temperature distribution is already asymmetric in the sheet width direction of the metal strip 1 at the entrance side of the induction heating device, or in the case where distribution of magnetic field is asymmetric due to snaking, etc., the plurality of magnetic cores 60 does not need to be arranged symmetrically in the sheet width direction of the metal strip 1, and the arrangement thereof may be appropriately changed depending on purpose.

Furthermore, circulation mode of the induction current 7 is not limited to be ellipsoidal, and can be any mode by appropriately changing the entering distances and/or the number of the magnetic cores 60 to be arranged.

So far, the case of one pair of induction coils is described in which the induction coil member 2a on the front surface side and the induction coil member 2b on the back surface side of the metal strip 1 are coupled, but the inventor confirmed that the above magnetic cores 6 and plurality of magnetic cores 60 effectively function also in the induction heating device in which a plurality of pairs of induction coils is successively arranged.

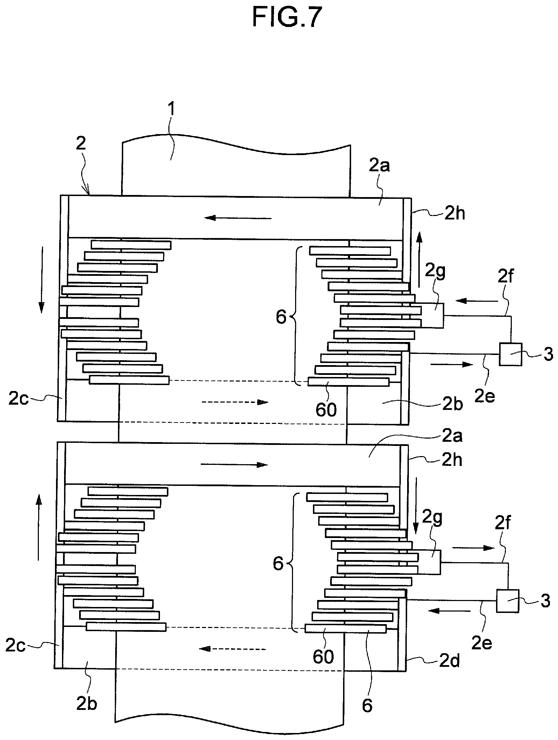

Fig. 7 illustrates an arrangement mode of the magnetic cores 60 when two pairs of induction coils 2 are arranged in parallel adjacently. In this case, currents having same phase need to flow in respective the induction coil member 2b and the induction coil member 2a located at the center. Making the induction coils 2 be placed to align in the traveling direction of the metal strip 1 and making currents having same phase flow in respective the adjacent induction coils 2 increases magnetic flux density at a center portion to relatively increase the ratio of heat generation at the center in the sheet width direction, which makes it possible to reduce degree of overheating at the ends in the sheet width direction, enabling more even heating.

Furthermore, changing outputs of the induction coils 2 of the first stage and second stage allows heating speed to be freely controlled, which makes it possible to heat different temperature areas at different heating speeds, and making it possible to adequately cope with various heating conditions metallurgically required.

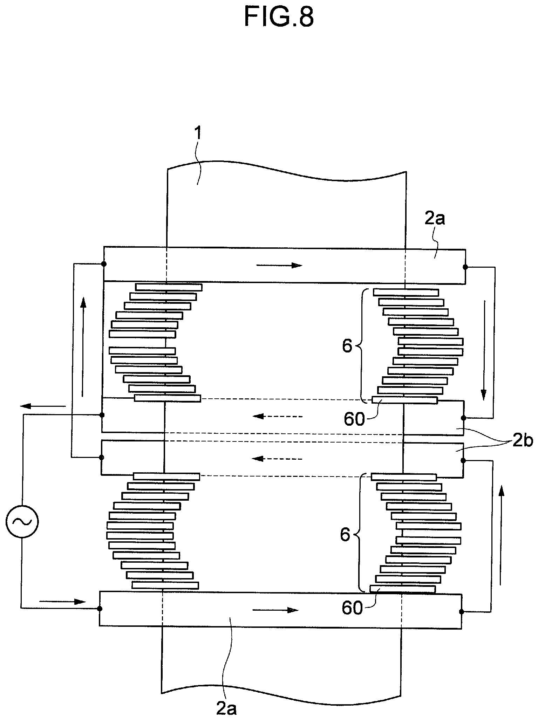

Fig. 8 illustrates an arrangement mode of the magnetic cores 60 when two pairs of induction coils 2 are coupled by series connection and arranged. Arranging the induction coils 2 by series connection makes the currents flowing respective the induction coils 2 of the first stage and the second stage become same, making it possible to make the calorific values at respective the induction coils 2 of the first stage and the second stage same.

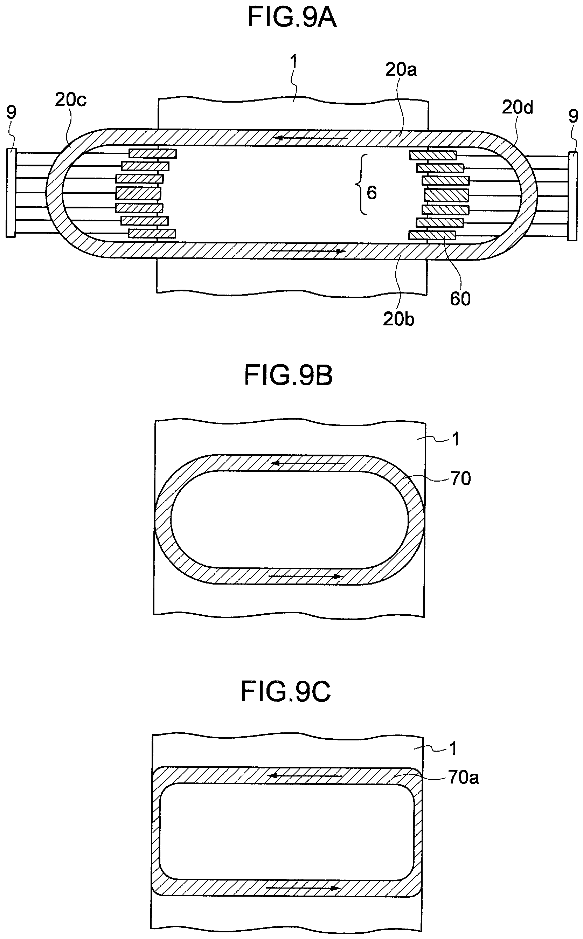

Fig. 9A illustrates an arrangement mode of an induction coil 20 and the magnetic cores 60 in the case of an induction heating device of a TF system.

The induction coil 20 is arranged on the both sides of the front surface side and back surface side of the metal strip 1. The direction of the current flowing in the induction coil 20 on the front surface side of the metal strip 1 is same as the direction of the current flowing in the induction coil 20 on the back surface side of the metal strip 1. The current flows in the directions shown by the arrows in the drawing.

The induction coil 20 on the front surface side of the metal strip 1 and the induction coil 20 on the back surface side of the metal strip 1 each include an induction coil member 20a, an induction coil member 20b, an induction coil member 20c, and an induction coil member 20d. The induction coil member 20a and the induction coil member 20b are arranged in parallel with the metal strip 1. The both ends of the induction coil member 20a and the both ends of the induction coil member 20b are protruded from the metal strip 1 in the sheet width direction of the metal strip 1. One end of the induction coil member 20a and one end of the induction coil member 20b are coupled by the induction coil member 20c, and the other end of the induction coil member 20a and the other end of the induction coil member 20b are coupled by the induction coil member 20d. The induction coil member 20c is an example of electrical connection means, and the induction coil member 20d is also an example of electrical connection means.

The induction coil member 20a and the induction coil member 20b are arranged such that the vertical projection image that is the vertical projection of the induction coil member 20a onto the metal strip 1, and the vertical projection image that is the vertical projection of the induction coil member 20b onto the metal strip 1 are not overlapped in the longitudinal direction (traveling direction) of the metal strip 1.

The vertical projection image of the induction coil member 20a of the induction coil 20 on the front surface side of the metal strip 1 onto the metal strip 1, and the vertical projection image of the induction coil member 20a of the induction coil 20 on the back surface side of the metal strip 1 onto the metal strip 1 are arranged to overlap in the longitudinal direction (traveling direction) of the metal strip 1.

The vertical projection image of the induction coil member 20b of the induction coil 20 on the front surface side of the metal strip 1 onto the metal strip 1, and the vertical projection image of the induction coil member 20b of the induction coil 20 on the back surface side of the metal strip 1 onto the metal strip 1 are arranged to overlap in the longitudinal direction (traveling direction) of the metal strip 1.

The magnetic core 6 including a plurality of magnetic cores 60 (a plurality of magnetic core members 60a and a plurality of magnetic core members 60b) has the same configuration as that of the magnetic core 6 including the plurality of magnetic cores 60 (the plurality of magnetic core member 60a and the plurality of magnetic core member 60b) described with reference to Fig. 5A, and a moving member 9 that makes each of the plurality of magnetic core members 60a and the plurality of magnetic core members 60b move forwardly and backwardly in the sheet width direction of the metal strip 1 is also identical to the moving member 9 described with reference to Fig. 5A.

Fig. 9B illustrates a plane mode of an induction current 70 generated in the metal strip 1 when the magnetic cores 6 as illustrated in Fig. 9A are provided. Fig. 9C illustrates a plane aspect of an induction current 70a generated in the metal strip 1 when the magnetic cores 6 illustrated in Fig. 9A are not provided.

Referencing to Fig. 9C, in the metal strip 1 just below the induction coil members 20a, 20b, the annular induction current 70a flowing in the directions of the arrows generates. Overheating readily occurs at the ends in the sheet width direction of the metal strip 1, because, for example, the induction current 70a flowing at the ends in the sheet width direction of the metal strip 1 (a) tries to make the reactance between with the primary current flowing in the induction coil member 20c or the induction coil member 20d coupling the induction coil member 20a and the induction coil member 20b small to be unfortunately shifted to the ends in the sheet width direction of the metal strip 1, unfortunately narrowing the width d2 of the current path, (b) the magnetic flux generated by the primary current flowing in the induction coil member 20c or the induction coil member 20d concentrically passing through the ends in the sheet width direction of the adjacent metal strip 1, and (c) at the ends in the sheet width direction of the metal strip 1, as compared with the center of the metal strip 1, heating is performed for a long period by the distance in the longitudinal direction (traveling direction) of the metal strip 1.

In contrast, referencing to Fig. 9B, the plurality of magnetic cores 60 is provided, so that the induction current 70 generated by the induction coil member 20a and the induction coil member 20b and suppressed in its concentration to the ends of the metal strip 1 by the plurality of magnetic cores 60 arranged at the both sides of the ends in the sheet width direction of the metal strip 1 elliptically circulates in the sheet surface of the metal strip 1. In this manner, the plurality of magnetic cores 60 gradually suppresses flowing direction of the induction current concentrated at the ends in the sheet width direction of the metal strip 1 to adjust the current density and heating period of the current flowing at the ends of the metal strip 1 to prevent overheating at the ends in the sheet width direction of the metal strip 1. Example

Next, an example will be described, but the condition of the example is a conditional example employed to confirm operability and effects of the invention, and the invention is not limited to the conditional example.

### (Example 1)

Electromagnetic field analysis was performed under the following conditions to confirm effects.

Target Material: 0.06% C steel sheet (sheet width 1 m, sheet thickness 1 mm).

Induction Coils: copper sheets having a width of 150 mm were placed to sandwich the steel sheet and such that the copper sheets on the front and back side become in parallel to each other, and vertical projection images thereof onto the steel sheet are separated by 300 mm in inside dimension. The distance between the steel sheet and the induction coils is 10 mm.

Magnetic core A: A magnetic core (made of ferrite) disposed between the induction coil and the induction coil. Width 30 mm, thickness 20 mm, depth 200 mm, inside height 100 mm, and depth 180 mm. Seven cores (one side of steel sheet ends) are arranged at intervals of 10 mm so as to be separated by 15 mm from the induction coils. Relative magnetic permeability is 2000.

Magnetic core B: A magnetic core (made of ferrite) for concentrating magnetic flux mounted on the back surface of the induction coil. Physical properties are same as those of the magnetic core A.

Heating: Heating at 800°C in non-magnetic area.

Property Values
Steel Sheet: relative magnetic permeability 1 [-], electric conductivity 10⁶ [S/m]
Induction Coils: relative magnetic permeability 1 [-], electric conductivity 0 [S/m]
Magnetic Cores: relative magnetic permeability 2000 [-], electric conductivity 0 [S/m]

Boundary Condition
Periphery Portion: symmetrical boundary

Current: 10 kHz constant current

### Analytical Model

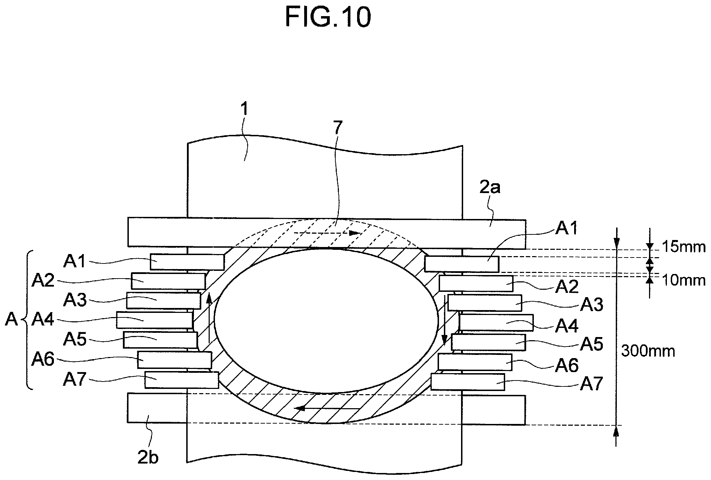

Example: The induction coil members 2a, 2b laid in the whole sheet width with a gap of 300 mm are placed in parallel on the front surface side and back surface side of the steel sheet 1 and magnetic cores A1 to A7 are arranged on both sides of the ends of the steel sheet and between the two induction coil members 2a, 2b. Fig. 10 schematically illustrates a configuration of the analytical model of the example.

A circulation mode of the induction current 7 generated by the induction coil member 2a (front surface side) and the induction coil member 2b (back surface side) was changed by changing entering distances (mm) of the magnetic cores A1 to A7 from steel sheet end, the temperature at the steel sheet end and the temperature at the steel sheet center were calculated, and the temperature ratio = temperature of steel sheet end/temperature of steel sheet center was calculated. Table 1 shows the results.

Comparative Examples 1 to 3: The induction coil members 2a, 2b laid in the whole sheet width with a gap of 300 mm were placed in parallel on the front surface side and back surface side of the steel sheet 1, and in each of the cases where no magnetic core was arranged on both sides of the ends of the steel sheet and between the two induction coil members 2a, 2b (Comparative Example 1), where the magnetic core A1 was arranged at one end of the steel sheet 1 and near the induction coil member 2a, and the magnetic core A7 was arranged at the other end of the steel sheet 1 and near the induction coil member 2b (Comparative Example 2), and where the magnetic cores A1, A7 are arranged at each of the both ends of the steel sheet and near the induction coil members 2a, 2b, respectively (Comparative Example 3), the temperature at the steel sheet end and the temperature at the steel sheet center were calculated, and the temperature ratio = temperature of the steel sheet end/the temperature of steel sheet center was calculated.

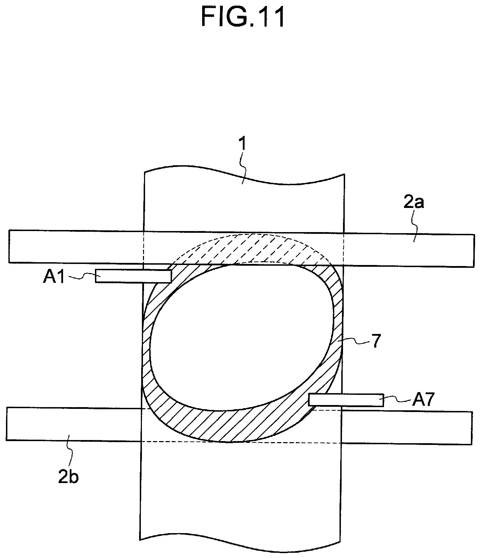

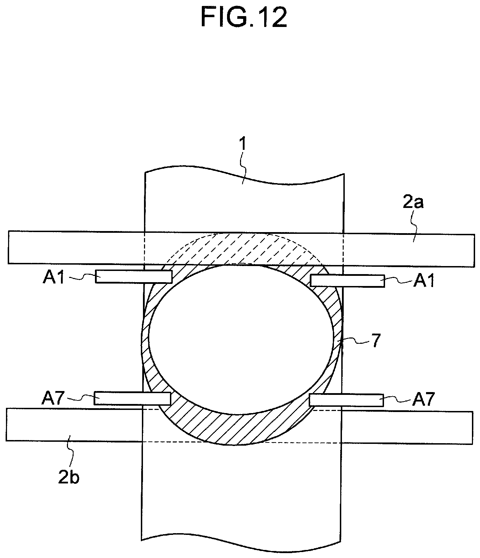

Table 1 illustrates the results. Fig. 11 and Fig. 12 each schematically illustrate a configuration of the analytical model of Comparative Example 2 and Comparative example 3, respectively.

**[Table 1]**

| | Temperature ratio (= end temperature/center temperature) |
|---|---|
| Example of the invention | 1.08 |
| Comparative Example 1 | 7.3 |
| Comparative Example 2 | 5.2 |
| Comparative Example 3 | 3.0 |

The temperature ratios illustrated in Table 1 show that temperature distribution in the sheet width direction of the steel sheet was largely improved to be homogenized.

According to the embodiments of the above description, it is possible to control the induction current flowing on end sides in the sheet width direction of the metal strip and to freely control temperature distribution of the metal strip in the sheet width direction regardless of magnetic or non-magnetic also when the sheet thickness is thin.

Furthermore, according to the embodiments of the description, it is possible to freely correct temperature distribution so as to be desired temperature distribution during heating the metal strip also in the case where the metal strip is heated before entering in the induction heating device and a large deviation exists in temperature distribution of the metal strip, thereby making it possible to improve heat processing quality of the metal strip.

Furthermore, according to the embodiments of the description, heating is possible without lowering heating rate also in the temperature area where temperature exceeds Curie point at which heat transfer becomes difficult as a heated material becomes high temperature by radiation heating, thereby making it possible to improve productivity to dramatically improve flexibility of schedule of production.

Although various typical embodiments are described above, the present invention is not limited to the embodiments. The scope of the present invention is limited only by the following claims.

## Claims

1. An induction heating device for a metal strip (1), comprising:
an induction coil (2) including:
a first induction coil member (2a; 20a) and a second induction coil member (2b; 20b) that are provided in parallel with a metal strip (1) across the metal strip (1) that travels in a longitudinal direction thereof, that are provided such that both ends of each of the first induction coil member (2a; 20a) and the second induction coil member (2b; 20b) protrude from the traveling metal strip (1) in a sheet width direction of the traveling metal strip (1), and that are arranged such that vertical projection images thereof onto the traveling metal strip (1) do not overlap each other in a traveling direction in which the metal strip (1) travels;
first electrical connection means (2c; 20c) for electrically connecting one of both ends of the first induction coil member (2a) and one of both ends of the second induction coil member (2b; 20b); and
second electrical connection means (2d; 2e, 2f; 20d) for electrically connecting another one of the both ends of the first induction coil member (2a; 20a) and another one of the both ends of the second induction coil member (2b; 20b);
a first magnetic core (6) including:
a first magnetic core member (6a) provided between the first induction coil member (2a; 20a) and the second induction coil member (2b; 20b) in the traveling direction, the first magnetic core member (6a) being provided on one of surface sides of the traveling metal strip (1) and covering one end portion in the sheet width direction of the traveling metal strip (1) at a center portion between the first induction coil member (2a; 20a) and the second induction coil member (2b; 20b) smaller than the one end portion on a side of each of the first induction coil member (2a; 20a) and the second induction coil member (2b; 20b); and
a second magnetic core member (6b) provided between the first induction coil member (2a; 20a) and the second induction coil member (2b; 20b) in the traveling direction, the second magnetic core member being provided on another one of the surface sides opposite from the one of the surface sides of the traveling metal strip (1) and covering the one end portion in the sheet width direction of the traveling metal strip (1) at the center portion between the first induction coil member (2a; 20a) and the second induction coil member (2b; 20b) smaller than the one end portion on the side of each of the first induction coil member (2a; 20a) and the second induction coil member (2b; 20b); and
a second magnetic core (6) including:
a third magnetic core member (6a) provided between the first induction coil member (2a; 20a) and the second induction coil member (2b; 20b) in the traveling direction, the third magnetic core member (6a) being provided on the one of the surface sides of the traveling metal strip (1) and covering another end portion opposite from the one end portion in the sheet width direction of the traveling metal strip (1) at the center portion between the first induction coil member (2a; 20a) and the second induction coil member (2b; 20b) smaller than the another end portion on the side of each of the first induction coil member (2a; 20a) and the second induction coil member (2b; 20b); and
a fourth magnetic core member (6b) provided between the first induction coil member (2a; 20a) and the second induction coil member (2b; 20b) in the traveling direction, the fourth magnetic core member (6b) being provided on the another one of the surface sides of the traveling metal strip (1) and covering the another end portion in the sheet width direction of the traveling metal strip (1) at the center portion between the first induction coil member (2a; 20a) and the second induction coil member (2b; 20b) smaller than the another end portion on the side of each of the first induction coil member (2a; 20a) and the second induction coil member (2b; 20b).

2. The induction heating device for a metal strip (1) according to claim 1, wherein the first induction coil member (2a; 20a) is provided on the one of the surface sides of the traveling metal strip, and the second induction coil member (2b; 20b) is provided on the another one of the surface sides of the traveling metal strip (1).

3. The induction heating device for a metal strip (1) according to claim 1, further comprising a second induction coil including:
a third induction coil member (20a) and a fourth induction coil member (20b) that are provided in parallel with the metal strip (1) across the metal strip (1) that travels in the longitudinal direction thereof, that are provided such that both ends of each of the third induction coil member (20a) and the fourth induction coil member (20b) protrude from the traveling metal strip (1) in the sheet width direction of the traveling metal strip, and that are arranged such that vertical projection images thereof onto the traveling metal strip (1) do not overlap each other in the traveling direction in which the metal strip (1) travels;
third electrical connection means (20c) for electrically connecting one of both ends of the third induction coil member (20a) and one of both ends of the fourth induction coil member (20b); and
fourth electrical connection means (20d) for electrically connecting another one of the both ends of the third induction coil member (20a) and another one of the both ends of the fourth induction coil member (20b),
wherein vertical projection images of the first induction coil member (2a; 20a) and the third induction coil member (20a) onto the traveling metal strip (1) overlap each other in the traveling direction in which the metal strip (1) travels, and vertical projection images of the second induction coil member (2b; 20b) and the fourth induction coil member (20b) onto the traveling metal strip (1) overlap each other in the traveling direction in which the metal strip (1) travels, and
wherein the first induction coil member (2a; 20a) and the second induction coil member (2b; 20b) are provided on the one of the surface sides of the traveling metal strip (1), and the third induction coil member (20a) and the fourth induction coil member (20b) are provided on the another one of the surface sides of the traveling metal strip (1).

4. The induction heating device for a metal strip (1) according to any one of claim 1 to claim 3, wherein
the first magnetic core member (6a) and the second magnetic core member (6b) each are divided into a same number of a plurality of members in the traveling direction, and the plurality of divided first magnetic core members (60a) and the plurality of divided second magnetic core members (60b) are arranged such that vertical projection images of the divided first magnetic core members (60a) and vertical projection images of the divided second magnetic core members (60b) onto the traveling metal strip (1) respectively overlap each other in the traveling direction in which the metal strip (1) travels, and
the third magnetic core member (6a) and the fourth magnetic core member (6b) each are divided into a same number of a plurality of members in the traveling direction, and the plurality of divided third magnetic core members (60a) and the plurality of divided fourth magnetic core members (60b) are arranged such that vertical projection images of the divided third magnetic core members (60a) and vertical projection images of the divided fourth magnetic core members (60b) onto the traveling metal strip (1) respectively overlap each other in the traveling direction in which the metal strip (1) travels.

5. The induction heating device for a metal strip (1) according to claim 4, further comprising: moving means (9) configured to move each of the divided plurality of members of the first magnetic core member (60a) and the second magnetic core member (60b), and each of the divided plurality of members of the third magnetic core member (60a) and the fourth magnetic core member (60b) in the sheet width direction of the traveling metal strip (1).

6. The induction heating device for a metal strip (1) according to claim 2, further comprising:
a second induction coil (2) having a structure identical to a structure of the induction coil (2);
a third magnetic core (6) having a structure identical to a structure of the first magnetic core (6); and
a fourth magnetic core (6) having a structure identical to a structure of the second magnetic core (6),
wherein the induction coil (2) and the second induction coil (2) are arranged in parallel in the traveling direction.

## Patentansprüche

1. Induktionsheizvorrichtung für ein Metallband (1), mit:
einer Induktionsspule (2), die aufweist:
ein erstes Induktionsspulenelement (2a; 20a) und ein zweites Induktionsspulenelement (2b; 20b), die parallel zu einem Metallband (1) quer über das Metallband (1) angeordnet sind, das sich in einer Längsrichtung davon bewegt, und die derart angeordnet sind, dass beide Enden sowohl des ersten Induktionsspulenelements (2a; 20a) als auch des zweiten Induktionsspulenelements (2b; 20b) von dem sich bewegenden Metallband (1) in einer Blechbreitenrichtung des sich bewegenden Metallbandes (1) hervorstehen, und die derart angeordnet sind, dass vertikale Projektionsbilder davon auf das sich bewegende Metallband (1) sich in einer Bewegungsrichtung des Metallbandes (1) nicht überlappen;
eine elektrische Verbindungseinrichtung (2c; 20c) zum elektrischen Verbinden eines der beiden Enden des ersten Induktionsspulenelements (2a) und eines der beiden Enden des zweiten Induktionsspulenelements (2b; 20b); und
eine zweite elektrische Verbindungseinrichtung (2d; 2e, 2f; 20d) zum elektrischen Verbinden eines anderen der beiden Enden des ersten Induktionsspulenelements (2a; 20a) und eines anderen der beiden Enden des zweiten Induktionsspulenelements (2b; 20b);
einem ersten Magnetkern (6), der aufweist:
ein erstes Magnetkernelement (6a), das in der Bewegungsrichtung zwischen dem ersten Induktionsspulenelement (2a; 20a) und dem zweiten Induktionsspulenelement (2b; 20b) angeordnet ist, wobei das erste Magnetkernelement (6a) auf einer der Oberflächenseiten des sich bewegenden Metallbandes (1) angeordnet ist und einen Endabschnitt des sich bewegenden Metallbandes (1) in der Blechbreitenrichtung in einem Mittenabschnitt zwischen dem ersten Induktionsspulenelement (2a; 20a) und dem zweiten Induktionsspulenelement (2b; 20b) bedeckt, der kleiner ist als der eine Endabschnitt auf einer Seite sowohl des ersten Induktionsspulenelements (2a; 20a) als auch des zweiten Induktionsspulenelements (2b; 20b); und
ein zweites Magnetkernelement (6b), das in der Bewegungsrichtung zwischen dem ersten Induktionsspulenelement (2a; 20a) und dem zweiten Induktionsspulenelement (2b; 20b) angeordnet ist, wobei das zweite Magnetkernelement auf der anderen der Oberflächenseiten gegenüberliegend der einen der Oberflächenseiten des sich bewegenden Metallbandes (1) angeordnet ist und den einen Endabschnitt des sich bewegenden Metallbandes (1) in der Blechbreitenrichtung im Mittenabschnitt zwischen dem ersten Induktionsspulenelement (2a; 20a) und dem zweiten Induktionsspulenelement (2b; 20b) bedeckt, der kleiner ist als der eine Endabschnitt auf der Seite sowohl des ersten Induktionsspulenelements (2a; 20a) als auch des zweiten Induktionsspulenelements (2b; 20b); und
einem zweiten Magnetkern (6), der aufweist:
ein drittes Magnetkernelement (6a), das in der Bewegungsrichtung zwischen dem ersten Induktionsspulenelement (2a; 20a) und dem zweiten Induktionsspulenelement (2b; 20b) angeordnet ist, wobei das dritte Magnetkernelement (6a) auf der einen der Oberflächenseiten des sich bewegenden Metallbandes (1) angeordnet ist und einen anderen Endabschnitt gegenüberliegend dem einen Endabschnitt des sich bewegenden Metallbandes (1) in der Blechbreitenrichtung im Mittenabschnitt zwischen dem ersten Induktionsspulenelement (2a; 20a) und dem zweiten Induktionsspulenelement (2b; 20b) bedeckt, der kleiner ist als der andere Endabschnitt auf der Seite sowohl des ersten Induktionsspulenelements (2a; 20a) als auch des zweiten Induktionsspulenelements (2b; 20b); und
ein viertes Magnetkernelement (6b), das in der Bewegungsrichtung zwischen dem ersten Induktionsspulenelement (2a; 20a) und dem zweiten Induktionsspulenelement (2b; 20b) angeordnet ist, wobei das vierte Magnetkernelement (6b) auf der anderen der Oberflächenseiten des sich bewegenden Metallbandes (1) angeordnet ist und den anderen Endabschnitt des sich bewegenden Metallbandes (1) in der Blechbreitenrichtung im Mittenabschnitt zwischen dem ersten Induktionsspulenelement (2a; 20a) und dem zweiten Induktionsspulenelement (2b; 20b) bedeckt, der kleiner ist als der andere Endabschnitt auf der Seite sowohl des ersten Induktionsspulenelements (2a; 20a) als auch des zweiten Induktionsspulenelements (2b; 20b).

2. Induktionsheizvorrichtung für ein Metallband (1) nach Anspruch 1, wobei
das erste Induktionsspulenelement (2a; 20a) auf der einen der Oberflächenseiten des sich bewegenden Metallbandes angeordnet ist und das zweite Induktionsspulenelement (2b; 20b) auf der anderen der Oberflächenseiten des sich bewegenden Metallbandes (1) angeordnet ist.

3. Induktionsheizvorrichtung für ein Metallband (1) nach Anspruch 1, ferner mit einer zweiten Induktionsspule, die aufweist:
ein drittes Induktionsspulenelement (20a) und ein viertes Induktionsspulenelement (20b), die parallel zum Metallband (1) quer über das Metallband (1) angeordnet sind, das sich in seiner Längsrichtung bewegt, und die derart angeordnet sind, dass beide Enden sowohl des dritten Induktionsspulenelements (20a) als auch des vierten Induktionsspulenelements (20b) von dem sich bewegenden Metallband (1) in der Blechbreitenrichtung des sich bewegenden Metallbandes hervorstehen, und derart angeordnet sind, dass vertikale Projektionsbilder davon auf dem sich bewegenden Metallband (1) sich in der Bewegungsrichtung des Metallbandes (l) nicht überlappen;
eine dritte elektrische Verbindungseinrichtung (20c) zum elektrischen Verbinden eines der beiden Enden des dritten Induktionsspulenelements (20a) und eines der beiden Enden des vierten Induktionsspulenelements (20b); und
eine vierte elektrische Verbindungseinrichtung (20d) zum elektrischen Verbinden eines anderen der beiden Enden des dritten Induktionsspulenelements (20a) und eines anderen der beiden Enden des vierten Induktionsspulenelements (20b),
wobei vertikale Projektionsbilder des ersten Induktionsspulenelements (2a; 20a) und des dritten Induktionsspulenelements (20a) auf dem sich bewegenden Metallband (1) sich in der Bewegungsrichtung des Metallbandes (1) überlappen, und vertikale Projektionsbilder des zweiten Induktionsspulenelements (2b; 20b) und des vierten Induktionsspulenelements (20b) auf dem sich bewegenden Metallband (1) sich in der Bewegungsrichtung des Metallbandes (1) überlappen, und
wobei das erste Induktionsspulenelement (2a; 20a) und das zweite Induktionsspulenelement (2b; 20b) auf einer der Oberflächenseiten des sich bewegenden Metallbandes (1) angeordnet sind und das dritte Induktionsspulenelement (20a) und das vierte Induktionsspulenelement (20b) auf der anderen der Oberflächenseiten des sich bewegenden Metallbandes (1) angeordnet sind.

4. Induktionsheizvorrichtung für ein Metallband (1) nach einem der Ansprüche 1 bis 3, wobei
das erste Magnetkernelement (6a) und das zweite Magnetkernelement (6b) jeweils in der Bewegungsrichtung in die gleiche Anzahl von mehreren Elementen geteilt sind und die mehreren geteilten ersten Magnetkernelemente (60a) und die mehreren geteilten zweiten Magnetkernelemente (60b) derart angeordnet sind, dass vertikale Projektionsbilder der geteilten ersten Magnetkernelemente (60a) und vertikale Projektionsbilder der geteilten zweiten Magnetkernelemente (60b) auf dem sich bewegenden Metallband (1) sich jeweils in der Bewegungsrichtung des Metallbandes (1) überlappen, und
das dritte Magnetkernelement (6a) und das vierte Magnetkernelement (6b) in der Bewegungsrichtung jeweils in eine gleiche Anzahl von mehreren Elementen geteilt sind und die mehreren geteilten dritten Magnetkernelemente (60a) und die mehreren geteilten vierten Magnetkernelemente (60b) derart angeordnet sind, dass vertikale Projektionsbilder der geteilten dritten Magnetkernelemente (60a) und vertikale Projektionsbilder der geteilten vierten Magnetkernelemente (60b) auf dem sich bewegenden Metallband (1) sich jeweils in der Bewegungsrichtung des Metallbandes (1) überlappen.

5. Induktionsheizvorrichtung für ein Metallband (1) nach Anspruch 4, ferner mit einer Bewegungseinrichtung (9), die dafür konfiguriert ist, jedes der geteilten mehreren Elemente des ersten Magnetkernelements (60a) und des zweiten Magnetkernelements (60b) und jedes der geteilten mehreren Elementen des dritten Magnetkernelements (60a) und des vierten Magnetkernelements (60b) in der Blechbreitenrichtung des sich bewegenden Metallbandes (1) zu bewegen.

6. Induktionsheizvorrichtung für ein Metallband (1) nach Anspruch 2, ferner mit:
einer zweiten Induktionsspule (2) mit einer Struktur, die mit der Struktur der Induktionsspule (2) identisch ist;
einem dritten Magnetkern (6) mit einer Struktur, die mit der Struktur des ersten Magnetkerns (6) identisch ist; und
einem vierten Magnetkern (6) mit einer Struktur, die mit der Struktur des zweiten Magnetkerns (6) identisch ist,
wobei die Induktionsspule (2) und die zweite Induktionsspule (2) in der Bewegungsrichtung parallel angeordnet sind.

## Revendications

1. Dispositif de chauffage par induction pour une bande métallique (1), comprenant :
une bobine d'induction (2) présentant :
un premier élément (2a ; 20a) de bobine d'induction et un deuxième élément (2b ; 20b) de bobine d'induction prévus en parallèle avec une bande métallique (1) transversalement à la bande métallique (1) se déplaçant dans une direction longitudinale, de telle manière que les deux extrémités du premier élément (2a ; 20a) de bobine d'induction et
celles du deuxième élément (2b ; 20b) de bobine d'induction dépassent de la bande métallique (1) en déplacement dans le sens de largeur de feuille de la bande métallique (1) en déplacement, et disposés de telle manière que des images en projection verticale de ceux-ci sur la bande métallique (1) en déplacement ne se chevauchent pas l'une l'autre dans la direction de déplacement de la bande métallique (1) ;
un premier moyen de connexion électrique (2c ; 20c) pour la connexion électrique d'une des deux extrémités du premier élément (2a) de bobine d'induction et d'une des deux extrémités du deuxième élément (2b ; 20b) de bobine d'induction ; et
un deuxième moyen de connexion électrique (2d ; 2e, 2f ; 20d) pour la connexion électrique d'une autre des deux extrémités du premier élément (2a ; 20a) de bobine d'induction et d'une autre des deux extrémités du deuxième élément (2b ; 20b) de bobine d'induction ;
un premier noyau magnétique (6) présentant :
un premier élément (6a) de noyau magnétique prévu entre le premier élément (2a ; 20a) de bobine d'induction et le deuxième élément (2b ; 20b) de bobine d'induction dans la direction de déplacement, le premier élément (6a) de noyau magnétique étant prévu sur un premier des côtés de surface de la bande métallique (1) en déplacement et couvrant une première partie d'extrémité dans le sens de la largeur de feuille de la bande métallique (1) en déplacement dans une partie centrale entre le premier élément (2a ; 20a) de bobine d'induction et le deuxième élément (2b ; 20b) de bobine d'induction plus petite que la première partie d'extrémité sur un côté du premier élément (2a ; 20a) de bobine d'induction et du deuxième élément (2b ; 20b) de bobine d'induction ; et
un deuxième élément (6b) de noyau magnétique prévu entre le premier élément (2a ; 20a) de bobine d'induction et le deuxième élément (2b ; 20b) de bobine d'induction dans la direction de déplacement, le deuxième élément de noyau magnétique étant prévu sur un autre côté de surface opposé au premier des côtés de surface de la bande métallique (1) en déplacement et couvrant la première partie d'extrémité dans le sens de la largeur de feuille de la bande métallique (1) en déplacement dans la partie centrale entre le premier élément (2a ; 20a) de bobine d'induction et le deuxième élément (2b ; 20b) de bobine d'induction plus petite que la première partie d'extrémité sur le côté du premier élément (2a ; 20a) de bobine d'induction et du deuxième élément (2b ; 20b) de bobine d'induction ; et
un deuxième noyau magnétique (6) présentant :
un troisième élément (6a) de noyau magnétique prévu entre le premier élément (2a ; 20a) de bobine d'induction et le deuxième élément (2b ; 20b) de bobine d'induction dans la direction de déplacement, le troisième élément (6a) de noyau magnétique étant prévu sur le premier des côtés de surface de la bande métallique (1) en déplacement et couvrant l'autre partie d'extrémité opposée à la première partie d'extrémité dans le sens de la largeur de feuille de la bande métallique (1) en déplacement dans la partie centrale entre le premier élément (2a ; 20a) de bobine d'induction et le deuxième élément (2b ; 20b) de bobine d'induction plus petite que l'autre partie d'extrémité sur le côté du premier élément (2a ; 20a) de bobine d'induction et du deuxième élément (2b ; 20b) de bobine d'induction ; et
un quatrième élément (6b) de noyau magnétique prévu entre le premier élément (2a ; 20a) de bobine d'induction et le deuxième élément (2b ; 20b) de bobine d'induction dans la direction de déplacement, le quatrième élément (6b) de noyau magnétique étant prévu sur l'autre côté de surface de la bande métallique (1) en déplacement et couvrant l'autre partie d'extrémité dans le sens de la largeur de feuille de la bande métallique (1) en déplacement dans la partie centrale entre le premier élément (2a ; 20a) de bobine d'induction et le deuxième élément (2b ; 20b) de bobine d'induction plus petite que l'autre partie d'extrémité sur le côté du premier élément (2a ; 20a) de bobine d'induction et du deuxième élément (2b ; 20b) de bobine d'induction.

2. Dispositif de chauffage par induction pour une bande métallique (1) selon la revendication 1, où le premier élément (2a ; 20a) de bobine d'induction est prévu sur le premier des côtés de surface de la bande métallique en déplacement, et le deuxième élément (2b ; 20b) de bobine d'induction est prévu sur l'autre côté de surface de la bande métallique (1) en déplacement.

3. Dispositif de chauffage par induction pour une bande métallique (1) selon la revendication 1, comprenant en outre une deuxième bobine d'induction présentant :
un troisième élément (20a) de bobine d'induction et un quatrième élément (20b) de bobine d'induction prévus en parallèle avec la bande métallique (1) transversalement à la bande métallique (1) se déplaçant dans la direction longitudinale, de telle manière que les deux extrémités du troisième élément (20a) de bobine d'induction et celles du quatrième élément (20b) de bobine d'induction dépassent de la bande métallique (1) en déplacement dans le sens de la largeur de feuille de la bande métallique en déplacement, et disposés de telle manière que des images en projection verticale de ceux-ci sur la bande métallique (1) en déplacement ne se chevauchent pas l'une l'autre dans la direction de déplacement de la bande métallique (1) ;
un troisième moyen de connexion électrique (20c) pour la connexion électrique d'une des deux extrémités du troisième élément (20a) de bobine d'induction et d'une des deux extrémités du quatrième élément (20b) de bobine d'induction ; et
un quatrième moyen de connexion électrique (20d) pour la connexion électrique d'une autre des deux extrémités du troisième élément (20a) de bobine d'induction et d'une autre des deux extrémités du quatrième élément (20b) de bobine d'induction,
où des images en projection verticale du premier élément (2a ; 20a) de bobine d'induction et du troisième élément (20a) de bobine d'induction sur la bande métallique (1) en déplacement se chevauchent l'une l'autre dans la direction de déplacement de la bande métallique (1), et des images en projection verticale du deuxième élément (2b ; 20b) de bobine d'induction et du quatrième élément (20b) de bobine d'induction sur la bande métallique (1) en déplacement se chevauchent l'une l'autre dans la direction de déplacement de la bande métallique (1), et
où le premier élément (2a ; 20a) de bobine d'induction et le deuxième élément (2b ; 20b) de bobine d'induction sont prévus sur le premier des côtés de surface de la bande métallique (1) en déplacement, et le troisième élément (20a) de bobine d'induction et le quatrième élément (20b) de bobine d'induction sont prévus sur l'autre côté de surface de la bande métallique (1) en déplacement.

4. Dispositif de chauffage par induction pour une bande métallique (1) selon l'une des revendications 1 à 3, où
le premier élément (6a) de noyau magnétique et le deuxième élément (6b) de noyau magnétique sont divisés chacun en une pluralité d'éléments en nombre égal dans la direction de déplacement, et la pluralité de premiers éléments (60a) de noyau magnétique divisés et la pluralité de deuxièmes éléments (60b) de noyau magnétique divisés sont disposées de telle manière que des images en projection verticale de des premiers éléments (60a) de noyau magnétique divisés et des images en projection verticale des deuxièmes éléments (60b) de noyau magnétique divisés sur la bande métallique (1) en déplacement se chevauchent respectivement l'une l'autre dans la direction de déplacement de la bande métallique (1), et
le troisième élément (6a) de noyau magnétique et le quatrième élément (6b) de noyau magnétique sont divisés chacun en une pluralité d'éléments en nombre égal dans la direction de déplacement, et la pluralité de troisièmes éléments (60a) de noyau magnétique divisés et la pluralité de quatrièmes éléments (60b) de noyau magnétique divisés sont disposées de telle manière que des images en projection verticale des troisièmes éléments (60a) de noyau magnétique divisés et des images en projection verticale des quatrièmes éléments (60b) de noyau magnétique divisés sur la bande métallique (1) en déplacement se chevauchent respectivement l'une l'autre dans la direction de déplacement de la bande métallique (1).

5. Dispositif de chauffage par induction pour une bande métallique (1) selon la revendication 4, comprenant en outre : un moyen de déplacement (9) prévu pour déplacer chacun des éléments de la pluralité d'éléments divisés du premier élément (60a) de noyau magnétique et du deuxième élément (60b) de noyau magnétique, et chacun des éléments de la pluralité d'éléments divisés du troisième élément (60a) de noyau magnétique et du quatrième élément (60b) de noyau magnétique dans le sens de la largeur de feuille de la bande métallique (1) en déplacement.

6. Dispositif de chauffage par induction pour une bande métallique (1) selon la revendication 2, comprenant en outre :
une deuxième bobine d'induction (2) ayant une structure identique à la structure de la bobine d'induction (2) ;
un troisième noyau magnétique (6) ayant une structure identique à la structure du premier noyau magnétique (6) ; et
un quatrième noyau magnétique (6) ayant une structure identique à la structure du deuxième noyau magnétique (6),
la bobine d'induction (2) et la deuxième bobine d'induction (2) étant disposées en parallèle dans la direction de déplacement.
